# EUROPÄISCHE PATENTSCHRIFT

(11) **EP 2 571 075 B1**
(45) Veröffentlichungstag und Bekanntmachung des Hinweises auf die Patenterteilung: **08.07.2015**
(21) Anmeldenummer: 11075211.0
(22) Anmeldetag: 16.09.2011
(51) Int. Cl.: H01M 2/10, H01M 10/48

(54) **Akkupack zur Versorgung von elektrischen Bauelementen, insbesondere Heizelementen**
Battery pack for supplying electrical construction elements, in particular heat elements
Batterie destinée à l'alimentation de composants électriques, notamment d'éléments chauffants

(43) Veröffentlichungstag der Anmeldung: 20.03.2013
(73) Patentinhaber: Sidas Central GmbH in Gründung, 1010 Wien (AT)
(72) Erfinder: Kremer, Gerhard, 8280 Fürstenfeld (AT); Maron, Urs, 2560 Nidau (CH)
(74) Vertreter: Cabinet Laurent & Charras

(56) Entgegenhaltungen:
- EP-A2- 1 944 849
- DE-T2- 69 400 201
- FR-A1- 2 842 946
- US-A1- 2006 208 695

## Beschreibung

Die Erfindung betrifft ein Akkupack zur Versorgung von elektrischen Bauelementen und insbesondere von Heizelementen, wie sie beispielsweise in beheizten Kleidungsstücken Verwendung finden.

Nach dem Stand der Technik sind verschiedene Bauarten derartiger Akkupacks bekannt. Beispielsweise ist aus der EP 1 950 820 B1 ein Akkupack bekannt, das ein Gehäuse mit einer Steuerung aufweist. In dieses Gehäuse können handelsübliche Standardakkus bzw. Batterien eingesetzt werden. Durch die dort vorgeschlagene Bauweise des Gehäuses wird zwar ein Austausch der Akkus besonders einfach gestaltet, jedoch müssen die Akkus zum Laden den Gehäuse entnommen werden.

Ausserdem bekannt sind Akkupacks, die einteilig ausgebildet sind und einen internen Akku sowie eine Steuereinheit beinhalten. Derartige Akkupacks sind zwar ausgesprochen komfortabel, jedoch ist ein Austausch des Akkus nicht möglich. Ist der Akku des Akkupacks defekt, muss das gesamte Akkupack ausgetauscht werden. Ein Nachrüsten mit einem nachträglich erworbenen grösseren Akku ist ebenso nicht möglich.

Dokument US 2006/208695 offenbart einen Akkupack zur Versorgung von elektrischen Bauelementen, umfassend eine Akkueinheit die mindestens einen ersten Gehäuseteil aufgenommenen Akku aufweist, und eine Steuereinheit zur Steuerung einer abzugebenden Spannung bzw. eines Stroms, wobei die Steuereinheit ein in einem zweiten Gehäuseteil aufgenommenes Elektronikteil aufweist. Das erste und zweite Gehäuseteil sind in einer durch einen Anschlag vorgegebenen Halteposition lösbar miteinander verbunden, wobei in der Halteposition am ersten Gehäuseteil angeordnete Kontakte mit am zweiten Gehäuseteil angeordneten Kontakten eine leitende Verbindung aufweisen

In Dokument EP 1 944 849 ist eine Stoßdämpfende dichte Konstruktion eines Akkupack offenbart. Eine Steuerungseinheit dient auch als Kurzschlussdetektor.

In Dokument FR 2 842 946 ist ein zweiteiliges Akkupackgehäuseteils, das Kontaktelemente an jedem Gehäuseteil aufweist. Die Gehäuseteilen werden zueinander und/oder voneinander verschoben zur Herstellung einer leitenden Verbindung.

In Dokument DE 69400201 ist ein zweiteiliges Akkupack offenbart, das Kontaktelemente an jedem Teil aufweist. Die Akkus sind an einem ersten Modul angebracht, das in ein Gehäuseteil herausnehmbar eingeschoben wird.

Aufgabe der Erfindung ist es, ein Akkupack zur Versorgung von elektrischen Bauelementen und insbesondere von Heizelementen vorzuschlagen, das einen hohen Komfort bietet, einen einfachen Aufbau aufweist und zugleich einen einfachen Austausch eines defekten oder aufzurüstenden Akkus ermöglicht.

Diese Aufgabe wird durch ein Akkupack nach Anspruch 1 gelöst. Vorteilhafte Weiterbildungen und Ausgestaltungen ergeben sich mit den Merkmalen der Unteransprüche.

Dadurch, dass für die Akkueinheit und die Steuereinheit jeweils separat ein Gehäuseteil vorgesehen ist, wobei das erste und das zweite Gehäuseteil in einer durch einen Anschlag vorgegebenen Halteposition lösbar verbunden bzw. arretiert sind, wobei am ersten Gehäuseteil angeordnete Kontakte mit am zweiten Gehäuseteil angeordneten Kontakten eine leitende Verbindung aufweisen, wird ein besonders einfacher und komfortabler Austausch des Akkus möglich. Somit können problemlos nachträglich erworbene grössere Akkus mit der Steuereinheit verbunden werden.

In einer besonders bevorzugten Ausführungsform ist mindestens ein Verriegelungselement mit den Gehäuseteilen in einem Formschluss verbunden. Das Verriegelungselement hemmt hierbei eine Bewegung der Gehäuseteile relativ zueinander und kann bevorzugt eine derartige relative Bewegung vollständig unterbinden. Als formschlüssige oder einen Formschluss bildende Verbindung wird hierbei eine Verbindung angesehen, bei der sich beide Verbindungspartner gegenseitig "im Weg" sind, sodass ein Auseinanderziehen nicht möglich ist.

In einer ersten Ausführungsform kann das Verrieglungselement als Spannelement zum Verspannen der beiden Gehäuseteile miteinander ausgebildet sein. Ebenso kann das Verriegelungselement als ein Einschubelement zum Einschieben in das erste und zweite Gehäuseteil geformt sein. Selbstverständlich können auch mehrere Verriegelungselemente vorgesehen sein, wobei beispielsweise zumindest eines der Verriegelungselement als Spannelement und eines der Verriegelungselemente als Einschubelement ausgebildet ist.

In Ausführungsformen mit Spannelement oder Einschubelement ist das Spannelement bzw. Einschubelement zum Unterbinden einer Relativbewegung des ersten Gehäuseteils zum zweiten Gehäuseteil ausgebildet. Besonders bevorzugt kann das Spannelement als ein Spannbügel ausgebildet sein, der in eine Außenfläche des ersten Gehäuseteils, die dem zweiten Gehäuseteil abgewandt ist, und eine Außenfläche des zweiten Gehäuseteils, die dem ersten Gehäuseteil abgewandt ist, eingreift. Hierdurch wird insbesondere eine Bewegung in Richtung der Flächennormalen der genannten vom jeweils anderen Gehäuseteil abgewandte Flächen der Gehäuseteile unterbunden. Zum Eingreifen in die genannten Flächen kann der Spannbügel entsprechende Vorsprünge aufweisen.

Eine besonders zuverlässige Fixierung wird möglich, wenn mindestens zwei Spannelemente vorgesehen sind, auf gegenüberliegenden Seiten übergreifend angeordnet sind.

Ebenso einer zuverlässigen Verbindung beider Gehäuseteile zuträglich ist, wenn die Gehäuseteile jeweils einen Einschubkanal aufweisen, der zumindest bereichsweise als Hinterschnitt ausgebildet ist. Die Einschubkanäle sind so angeodnet, dass sie in einer Halteposition fluchtend miteinander verlaufen, während sie außerhalb der Halteposition versetzt zueinander verlaufen. In dem Einschubkanal ist das Einschubelement angeordnet. Hierbei ist insbesondere eine Anordnung günstig, bei der das Einschubelement auf gegenüberliegenden Seiten des Einschubkanals zumindest über einen Teil seiner Länge anliegt. Hierdurch verhindert das Einschubelement ein Bewegen der Gehäuseteile aus der Halteposition, denn hierbei müssten die Einschubkanäle aus ihrer fluchtenden Orientierung heraus bewegt werden. Da das Einschubelement jedoch an den Wänden der Einschubkanäle anliegt, ist ein Schieben aus einer fluchtenden Orientierung heraus bei eingesetztem Einschubelement nicht möglich.

Um ein ungewolltes Herauslösen des Einschubelements zu vermeiden kann dieses ein Rastelement aufweisen. Außerdem kann eine entsprechende Rastvertiefung in einem Boden des Einschubkanals vorgesehen sein, so dass das Einschubelement mit mindestens einem Gehäuseteil verrastbar ist.

Ein besonders gutes Absichern des Einschubelements in dem Einschubkanal ist möglich, wenn an einem Ende des Einschubkanals ein Anschlag vorgesehen ist, so dass das Einschubelement nur von einer Seite in den Einschubkanal eingeschoben werden kann und auch nur über diese Seite aus dem Einschubkanal entfernt werden kann. Das Rastelement kann dann mit einer Öffnung vom Anschlag weg gerichtet sein, wobei ein Lösen einer Rastverbindung des Rastelements in der Rastvertiefung durch Eingriff in diese Öffnung möglich ist. Aufgrund der Anordnung der Öffnung führt ein Eingriff in diese zumeist zu einer Kraftwirkung in Richtung des Anschlags, so dass eine zusätzliche Kraft in Richtung vom Anschlag weg nötig ist, um das Einschubelement aus dem Einschubkanal zu schieben und so ein erneutes Einrasten des Rastelements zu verhindern.

Außerdem kann ein als Klemmelement zum Befestigen des Akkupacks an einem Kleidungsstück ausgebildetes weiteres Verriegelungselement vorgesehen sein. Dieses Klemmelement kann beispielsweise lösbar im Einschubkanal befestigt sein, wobei vorzugsweise das Einschubelement im eingeschobenen Zustand ein Entfernen des Klemmelements blockiert. Hierzu kann das Klemmelement beispielsweise auf beiden Seiten des Einschubkanals in einen hinterschnittenen Bereich des Kanals ragen, wobei das Einschubelement weiter mittig im Kanal angeordnet ist. Hierdurch blockiert das Einschubelement ein Schieben des Klemmelements in einen nicht hinterschnittenen Bereich des Kanals und somit ein Entfernen des Klemmelements.

In einem bevorzugten Ausführungsbeispiel umfasst vorzugsweise mindestens eines der Gehäuseteile einen Ansatz, der in eine Vertiefung des jeweils anderen Gehäuseteils eingreift und zum lösbaren Arretieren bzw. Verbinden in der Halteposition dient. Die Gehäuseteile sind dann dazu ausgebildet, durch Ineinanderfügen des Ansatzes und der Vertiefung in eine erste Richtung in eine Einschubposition gebracht zu werden und durch Verschieben in eine von der ersten Richtung verschiedene zweite Richtung von der Einschubposition in die Halteposition überführt zu werden. Die erste Richtung ist hierbei bevorzugt die Richtung, in der die beiden Gehäuseteile in der Halteposition versetzt zueinander angeordnet sind. Die zweite Richtung kann insbesondere im Wesentlichen orthogonal zur ersten Richtung sein. Unter im Wesentlichen orthogonal wird hierbei verstanden, dass ein Winkel zwischen der ersten Richtung und der zweiten Richtung zwischen 80° und 100° liegt. Eine genaue orthogonale Anordnung der ersten und zweiten Richtung ist jedoch besonders bevorzugt. Bei derartigen Ausführungsformen weisen beide Gehäuseteile Formschlusselemente für eine formschlüssige Verbindung in der Halteposition nach dem Verschieben auf. Die Formschlusselemente können besonders bevorzugt am Ansatz und an der Vertiefung angeordnet sein.

In einer besonders zweckmäßigen Ausgestaltung der Formschlusselemente sind diese als eine Reihe von mit Abstand zueinander angeordneten Vorsprüngen ausgebildet, die sich in der Halteposition gegenseitig hintergreifen. Besonders vorzugsweise ist die Breite der Abstände zwischen den Vorsprüngen mindestens genauso groß wie die Breite der Vorsprünge. Beide Gehäuseteile können dann aufeinander aufgesteckt werden, indem die Vorsprünge am ersten Gehäuseteil durch die Zwischenräume zwischen den Vorsprüngen am zweiten Gehäuseteil durchgeschoben werden. Die Position, in der die Vorsprünge des ersten Gehäuseteils jeweils Abständen, zwischen den Vorsprung des zweiten Gehäuseteils gegenüberliegen, wobei die beiden Gehäuseteile bereits aufeinander aufgesteckt sind, wird in derartigen Ausführungsformen als Einschubposition definiert. Aus der Einschubpoition können sie in der zweiten Richtung Verschoben werden um in die Halteposition zu gelangen. Eine Seitenfläche des Ansatzes und eine Innenfläche der Vertiefung könne hierbei als seitlicher Anschlag dienen, derart, dass in der Halteposition die Seitenfläche des Ansatzes an der Innenfläche der Vertiefung anliegt und somit ein Weiterschieben in der zweiten Richtung verhindert.

Eine besonders einfache Kontaktierung zwischen dem ersten Gehäuseteil und dem zweiten Gehäuseteil und somit zwischen der Steuereinheit und der Akkueinheit ist möglich, wenn die elektrischen Kontakte am Ansatz und am Boden der Vertiefung angeordnet sind. Die Kontakte können beispielsweise als Schleifkontakte ausgebildet sein. Eine besonders zuverlässige elektrische Kontaktierung wird möglich, wenn neben den Kontakten des Ansatzes oder den Kontakten der Vertiefung mindestens eine Einsenkung angeordnet ist oder eine Einsenkung von den Kontakten umfasst ist. Die Kontakte des jeweils anderen Gehäuseteils können dann in der Einschubposition in die Einsenkung eingreifen. Durch Verschieben der Gehäuseteile von der Einschubposition in die Halteposition werden die Kontakte aus der Einsenkung heraus und auf die Kontakte des jeweils anderen Gehäuseteils aufgeschoben. Da diese Höhe als die Einsenkung liegen, sind die Kontakte in der Halteposition gegeneinander vorgespannt.

Prinzipiell sind verschiedene geometrische Ausgestaltungen des Akkupacks denkbar, besonders bevorzugt ist es jedoch, das Akkupack derart auszubilden, dass es in seiner Halteposition quaderförmig ist. Ebenso ist es bevorzugt, wenn auch jedes der Gehäuseteile einzeln eine Quaderform aufweist. Beide quaderförmigen Gehäuseteile sind dann in der Einschubposition zueinander versetzt, während Seitenflächen der beiden Gehäuseteile in der Halteposition zueinander bündig verlaufen, so dass ein insgesamt quaderförmiges Akkupack gebildet wird. Es sei erwähnt, dass, wie bei Akkupacks nach dem Stand der Technik üblich, Bedienelemente an der Steuereinheit vorgesehen sein können. Ebenso kann eine Bedienung mittels einer Fernbedienung vorgesehen sein. Entsprechend betrifft die Erfindung auch ein System aus einem Akkupack wie vorangehend beschrieben und einer Fernbedienung, über die die Steuereinheit bedient werden kann.

Nachfolgend werden Ausführungen der Erfindung anhand von Figuren näher erläutert. Es zeigen:
- Fig. 1: eine erste Ausführungsform eines Akkupacks in seiner Halteposition mit darin befestigten Verriegelungselementen,
- Fig. 2: das Akkupack aus Fig. 1 ohne Verriegelungselemente,
- Fig. 3: ein erstes Gehäuseteil des Akkupacks aus Fig. 1,
- Fig. 4: Aufsicht auf eine Innenseite des zweiten Gehäuseteils des Akkupacks aus Fig. 1,
- Fig. 5: ein als Einschubelement ausgebildetes Verriegelungselement des Akkupacks aus Fig. 1,
- Fig. 6: als Spannbügel ausgebildetes Verriegelungselement des Akkupacks aus Fig. 1,
- Fig. 7: eine alternative Ausführungsform eines Klemmelements,
- Fig. 8: eine Verbindung zwischen der alternativen Ausführungsform des Klemmelements aus Fig. 7 und dem Einschubelement aus Fig. 5 und
- Fig. 9: eine Ausführungsform einer Fernsteuerung für ein erfindungsgemäßes Akkupack.

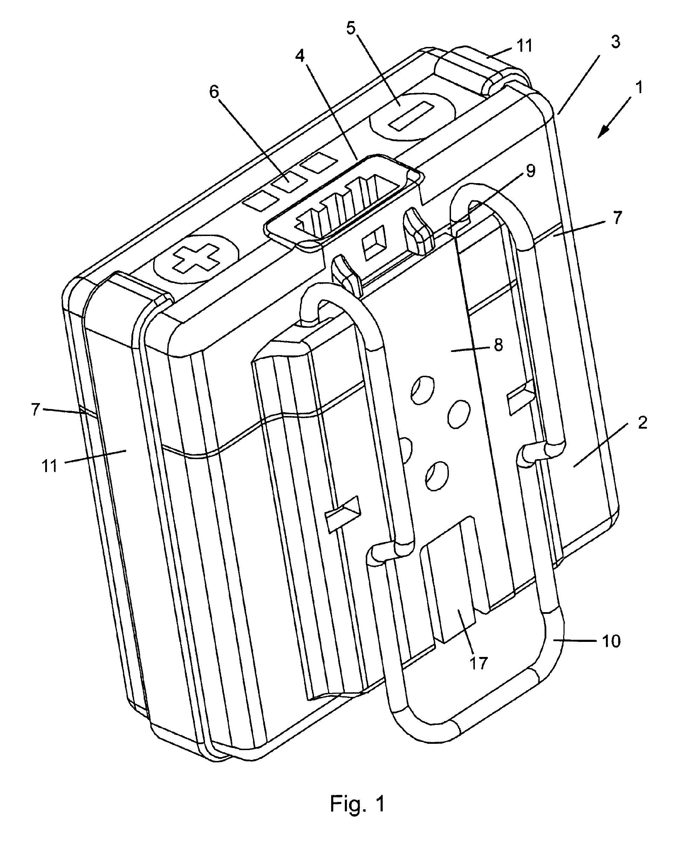

In Fig. 1 ist ein Akkupack 1 dargestellt, das ein erstes Gehäuseteil 2 und ein zweites Gehäuseteil 3 umfasst. Das erste Gehäuseteil 2 beinhaltet ein oder mehrere Akkus, die im vorliegenden Beispiel als Lithiumionenakkus ausgebildet sind. Das zweite Gehäuseteil 3 beinhaltet eine Steuerelektronik zur Regelung eines durch den Anschluss 4 ausgegebenen Stroms. Des Weiteren umfasst das zweite Gehäuseteil 3 Bedienelemente 5, über die der ausgegebene Strom eingestellt werden kann, sowie Anzeigeelemente 6 z.B. LED's, die einen zur Ausgabe durch den Anschluss 4 eingestellten Strom dargestellt. Das erste Gehäuseteil 2 und das zweite Gehäuseteil 3 sind entlang einer Fuge 7 miteinander verbunden. Des Weiteren umfasst das Akkupack 1 ein Einschubelement 8, welches in einem Einschubkanal 9 angeordnet ist, ein Klemmelement 10, welches zum Befestigen des Akkupacks an der Kleidung dient und zwischen dem Einschubelement 8 und einem Rand des Einschubkanals festgeklemmt ist sowie zwei die Gehäuseteile umgreifender Spannbügel 11. Das Akkupack ist im Wesentlichen quaderförmig ausgebildet, wobei die Spannbügel an den schmalen Seitenflächen angeordnet sind und die schmale Ober- und Unterseite übergreifen.

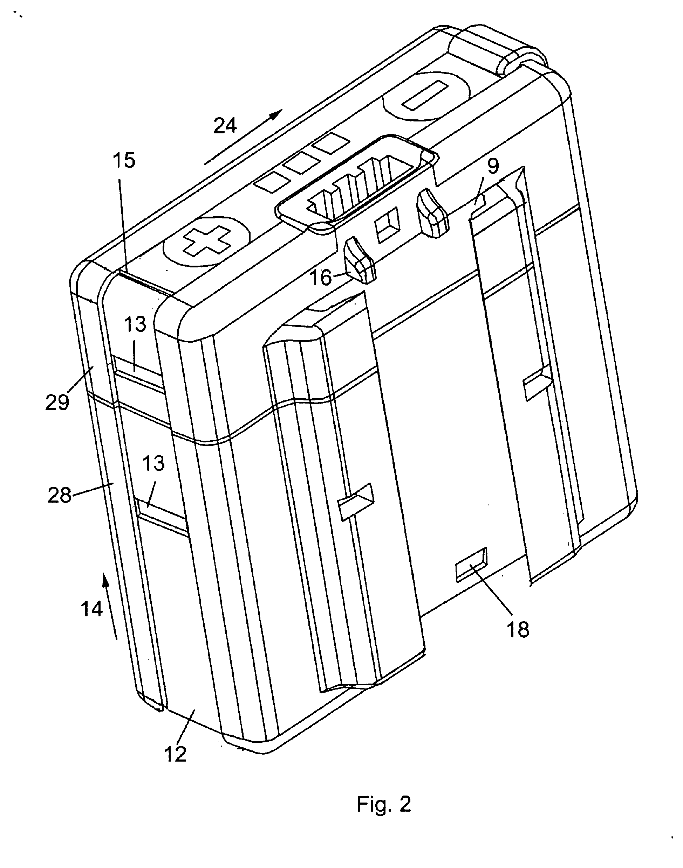

Die Befestigung des Einschubelements 8, des Klemmelements 10 und der Spannbügel 11 wird näher im Zusammenhang mit Fig. 2, welche das Akkupack 1 ohne die genannten Elemente darstellt, erläutert. Zum Anbringen der Spannbügel 11 weist das Akkupack 1 auf beiden Seiten eine sich über beide Gehäuseteile erstreckende Nut 12 auf. In der Nut 12 sind mehrere Einsenkungen 13 eingebracht, in die auf der Innenseite der Spannbügel 11 angeordnete Erhöhungen eingreifen können. Des Weiteren ist jeweils eine Einsenkung 15 auf einer Oberseite des zweiten Gehäuseteils 3 sowie auf der Unterseite (nicht sichtbar) des ersten Gehäuseteils 2 vorgesehen. In die Einsenkungen 15 greifen ebenso auf der Innenseite des Spannbügels 11 angeordnete Erhöhungen ein, wobei hierdurch zuverlässig eine Bewegung der Gehäuseteile 2 und 3 relativ zueinander in einer ersten Richtung 14 verhindert wird.

Für das Einschubelement 8 sowie das Klemmelement 10 ist ein bereichsweise als Hinterschnitt ausgebildeter Einschubkanal 9 an einer großen Fläche des Quaders vorgesehen. Das Klemmelement 10 greift in den äußeren Bereich des Einschubkanals 9 ein, während das Einschubelement 8 im Einschubkanal 9 weiter innenliegend angeordnet ist und ein Hineindrücken des Klemmelements 10 in den inneren Bereich des Einschubkanals 9 verhindert. Hierdurch wird auch ein Entfernen des Klemmelements 10 blockiert.

An einem Ende des Einschubkanals 9 sind Anschläge 16 vorgesehen. Hierdurch kann das Einschubelement 8 ausschließlich von der den Anschlägen 16 gegenüberliegenden Seite in den Einschubkanal 9 eingeschoben werden. Auf der den Anschlägen 16 gegenüberliegenden Seite weist das Einschubelement 8 (vgl. Fig. 1) ein Rastelement 17 auf. Des Weiteren ist im Boden des Einschubkanals 9 eine Rastvertiefung 18 vorgesehen, in die das Rastelement 17 eingreifen kann. Zum Lösen des Rastelements 17 aus der Rastvertiefung 18 kann das Rastelement 17 von der den Anschlägen 16 entgegengesetzten Seite des Einschubkanals aus untergriffen werden. Um das Einschubelement 8 aus dem Einschubkanal 9 zu entfernen ist es daher notwendig, es von der den Anschlägen 16 entgegengesetzten Seite des Einschubkanals aus zu untergreifen und gleichzeitig eine Kraft aus der Richtung der Anschläge einzubringen. Da somit Krafteinwirkungen aus verschiedenen Richtungen notwendig sind, wird ein versehentliches Herauslösen des Einschubs 8 aus dem Einschubkanal 9 besonders zuverlässig verhindert.

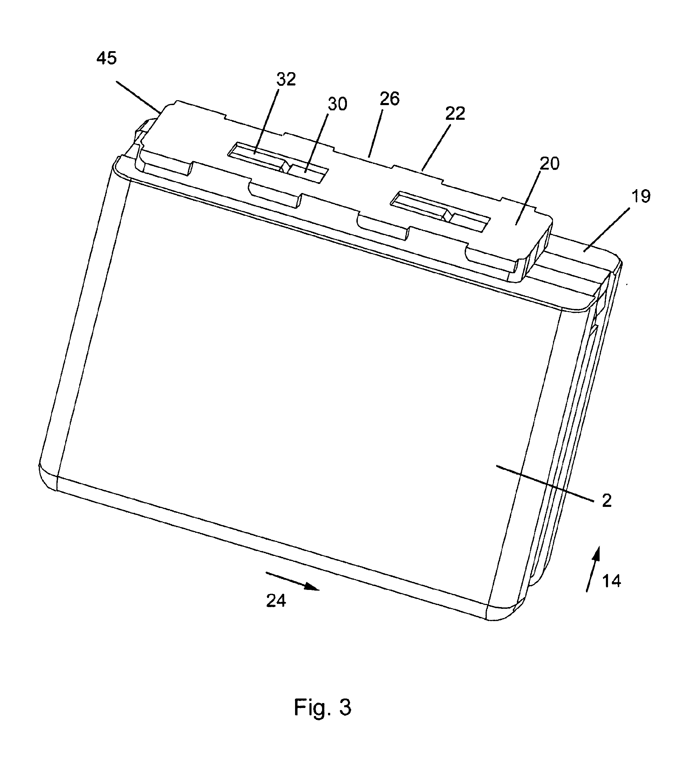

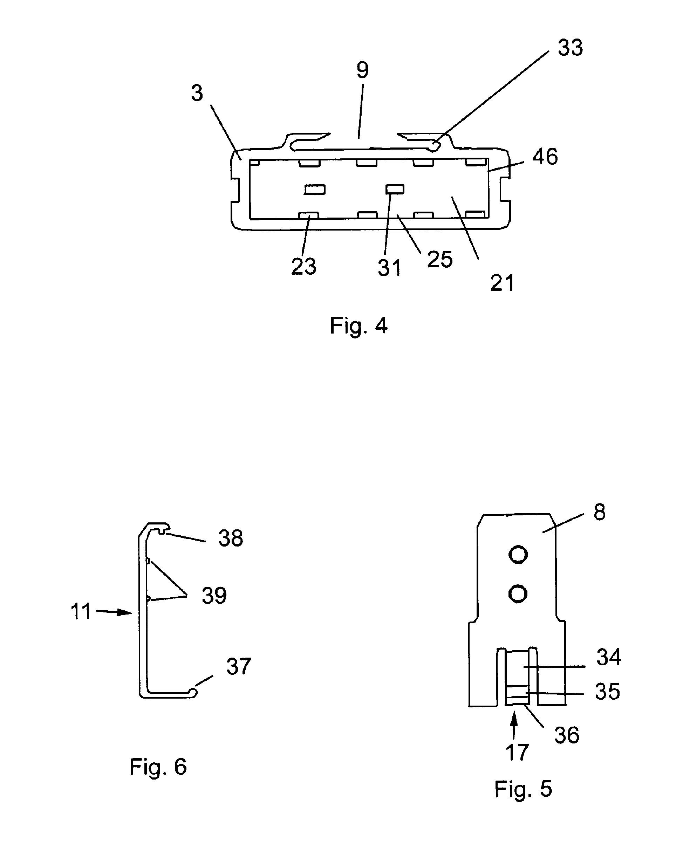

Zusätzlich zu den Verriegelungselementen 8, 10 und 11 ist noch ein Ansatz an einen der Gehäuseteile und eine entsprechende Vertiefung am jeweils anderen Gehäuseteil vorgesehen, um die beiden Gehäuseteile 2 und 3 miteinander zu verbinden. Dies kann anhand der Fign. 3 und 4 nachvollzogen werden. In Fig. 3 ist das erste Gehäuseteil 2 ohne das zweite Gehäuseteil 3 dargestellt. Wie zu erkennen ist, weist das erste, im Wesentlichen quaderförmige Gehäuseteil 2 auf seiner oberen schmalen Fläche 19, die in der in Fig. 1 dargestellten Halteposition dem zweiten Gehäuseteil 3 zugewandt ist, einen Ansatz 20 auf. Das in Fig. 4 dargestellte zweite Gehäuseteil 3 weist eine entsprechende Vertiefung 21 auf, in die der Ansatz 20 eingreifen kann.

Sowohl der Ansatz 20 als auch die Vertiefung 21 sind seitlich mit Vorsprüngen 22 und 23 ausgestattet. Um die beiden Gehäuseteile zu verbinden werden die Gehäuseteile in seitlicher Richtung 24 zueinander versetzt aufeinander aufgesetzt. Die Vorsprünge 22 am ersten Gehäuseteil 2 werden hierbei durch Lücken 25 zwischen den Vorsprüngen 23 des zweiten Gehäuseteils hindurchgeschoben. Die Vorsprünge 23 des zweiten Gehäuseteils hingegen werden durch Lücken 26 zwischen den Vorsprüngen 22 des ersten Gehäuseteils hindurchgeschoben. Hierdurch gelangen die Gehäuseteile in eine Position, in der der Ansatz 20 bereits in die Vertiefung 21 eingreift, wobei die Gehäuseteile jedoch noch nicht formschlüssig miteinander verbunden sind. In dieser Position sind die Seitenflächen 28 und 29 des ersten und zweiten Gehäuseteils versetzt zueinander. Diese Position wird auch als Einschubposition bezeichnet. Um in eine Position zu gelangen, in der beide Gehäuseteile fest miteinander verbunden sind, werden die Gehäuseteile seitlich zueinander verschoben, bis die Seitenflächen 28, 29 bündig zueinander sind und die Seitenfläche 45 des Ansatzes an einer entsprechenden Innenfläche 46 der Vertiefung 21 anliegt. Die Seitenfläche 45 und die Innenfläche 46 bilden hierbei einen seitlichen Anschlag, der ein weiterschieben nach Erreichen der Halteposition verhindert. Durch das seitliche Verschieben hintergreifen sich die Vorsprünge 22 des ersten Gehäuseteils und die Vorsprünge 23 des zweiten Gehäuseteils gegenseitig, so dass eine formschlüssige Verbindung zwischen beiden Gehäuseteilen gebildet wird.

Beim Bilden der formschlüssigen Verbindung wird auch ein elektrischer Kontakt zwischen dem ersten Gehäuseteil 2 und dem zweiten Gehäuseteil 3 und somit zwischen der Akkueinheit und der Steuerelektronik gebildet. Hierzu sind am Ansatz 20 Kontakte 30 und an der Vertiefung 21 Kontakte 31 vorgesehen. Die Kontakte 31 sind hierbei als Schleifkontakte ausgebildet. Neben den Kontakten 30 am Ansatz 20 ist ein vertiefter Bereich 32 vorgesehen. Werden die beiden Gehäuseteile in die Einschubposition gebracht, so treffen zunächst die Kontakte 31 in der Vertiefung 21 auf den vertieften Bereich 32 und bei seitlichem Verschieben der Gehäuseteile zueinander, werden die Kontakte 31 auf die Kontakte 30 aufgeschoben. Da diese geringfügig höher liegen als der vertiefte Bereich 32 werden die Kontakte gegeneinander vorgespannt, so dass eine besonders zuverlässige elektrische Verbindung gebildet wird. Es sei darauf hingewiesen, dass die vertieften Bereiche nicht unbedingt notwendig sind. Ebenso können die Kontakte so ausgebildet sein, dass bereits in der Einschubposition eine Vorspannung der Kontakte in die erste Richtung 14 erzeugt wird. Die Kontakte sind Bestandteile einer elektronischen Steuereinheit die auf einer Leiterplatte aufgebrachte elektronische Elemente umfasst und in dem Gehäuseteil 3 aufgenommen ist.

Ebenso in Fig. 4 zu erkennen ist der Einschubkanal 9 mit seinem hinterschnittenen Bereich 33.

In Fig. 5 ist das in Fig. 1 dargestellte Einschubelement von seiner Rückseite betrachtet dargestellt. Das Einschubelement 8 weist, wie bereits erwähnt, ein Rastelement 17 auf. Das Rastelement 17 weist einen Bereich 34 auf, in dem eine Dicke des Materials relativ gering ist. Hierdurch hat der Bereich 34 federnde Eigenschaften. Im Bereich 35 ist das Rastelement 17 mit erhöhter Dicke ausgebildet, da dieser Bereich zum Eingreifen in der Rastvertiefung 18 dient. Im Bereich 36 wiederum weist das Rastelement 17 eine geringe Dicke auf, so dass es ein Untergreifen von der den Anschlägen 16 abgewandten Seite aus zulässt.

In Fig. 6 ist ein Spannbügel 11 in Seitenansicht dargestellt. Der Spannbügel 11 weist eine erste Erhöhung 37 auf, die zum Eingreifen in eine Unterseite des ersten Gehäuseteils dient. Des Weiteren ist eine zweite Erhöhung 38 vorgesehen, welche, wie in den Fign. 1 und 2 gezeigt, in die Oberseite des zweiten Gehäuseteils eingreift. Außerdem sind weitere Erhöhungen 39 vorgesehen, die zum Eingreifen in die seitlichen Vertiefungen 13 und somit zum weiteren Stabilisieren der Verbindung zwischen Klemmbügel 11 und den Gehäuseteilen 2 und 3 dienen.

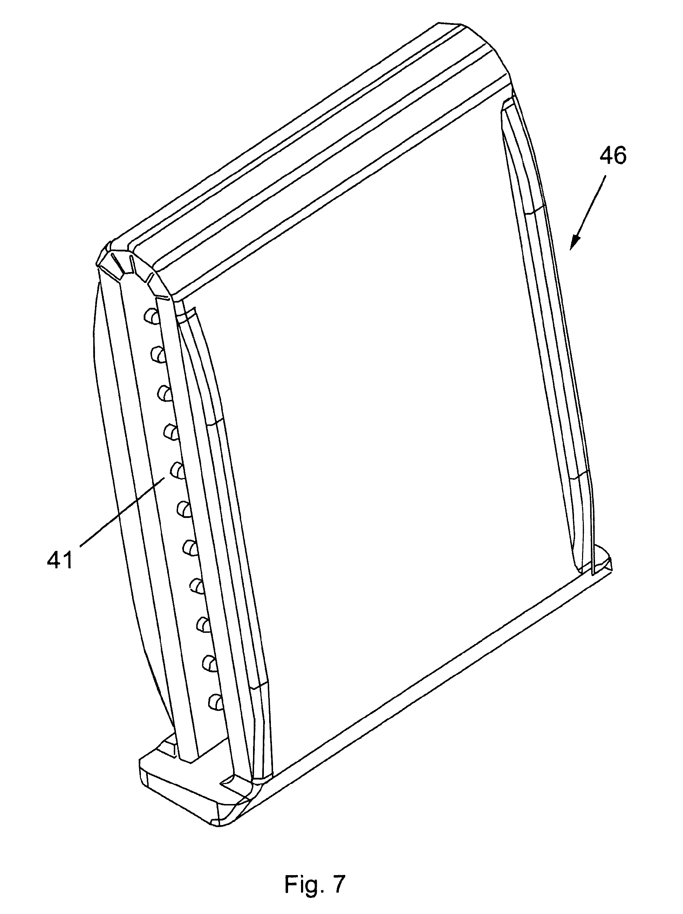

In Fig. 7 ist ein alternatives Bauteil zum Klemmelement 10 aus Fig. 1 dargestellt. Im Gegensatz zu dem Klemmelement 10 aus Fig. 1 ist das Halteelement 40 in Fig. 7 dazu ausgebildet, ein Kleidungsstück auf beiden Seiten zu umgreifen. Das Halteelement 40 weist eine gezackte Oberfläche 41 auf, die dazu dient, in das Kleidungsstück einzugreifen und somit einen Formschluss mit dem Kleidungsstück zu erzeugen. Ein weiterer Unterschied des Halteelement 40 aus Fig. 7 zum Klemmelement 10 aus Fig. 1 ist, dass das Halteelement 40 nicht mit dem Einschubkanal 9 befestigt wird. Stattdessen wird das Halteelement 40 mit seiner Rückseite in Eingriff mit dem Einschubelement 8 gebracht. Somit trägt das Halteelement 40 selbst nicht zur Verriegelung des ersten und zweiten Gehäuseteils bei. Das Einschubelement 8 dient jedoch genauso wie in dem Ausführungsbeispiel aus Figur 1 zur Verrieglung der Gehäuseteile.

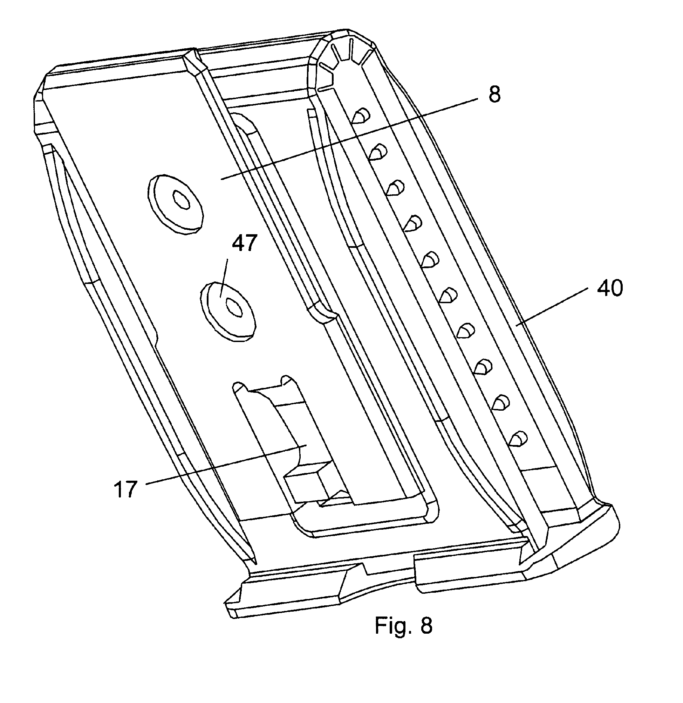

In Figur 8 ist die Verbindung zwischen dem Halteelement 40 und dem Einschubelement 8 zu erkennen. Wie in der Figur dargestellt, ist das Halteelement 40 mit dem Einschubelement 8 durch Nieten 47 verbunden.

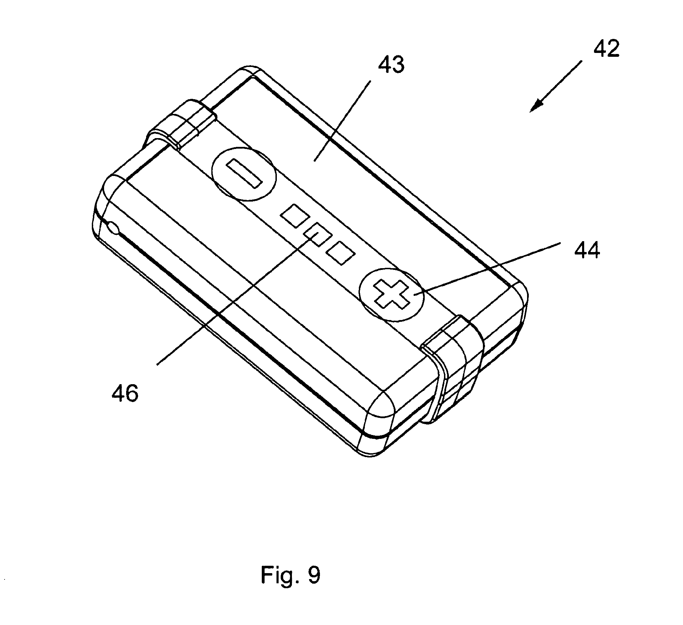

In Figur 9 ist eine Fernsteuerung 42 für ein Akkupack dargestellt. Die Fernsteuerung weist ein eigenes, von den Gehäuseteilen 2 und 3 separates Gehäuse 43 auf und ist mit Bedienelementen 44 ausgestattet. Desweiteren Umfasst die Fernsteuerung 42 ein nicht dargestelltes Sendemodul, über das durch die Bedienelemente 44 eingegebene Befehle an die Steuereinheit übermittelt werden. Wie das zweite Gehäuseteil, weist auch die Fernsteuerung Anzeigeelemente 46 (beispielsweise LED's) auf, über die einem Nutzer ein aktuell eingestellter Strom dargestellt wird. In einer nicht dargestellten weiteren Ausführungsform kann die Fernsteuerung auch ein Empfängermodul und eine weitere Anzeige aufweisen, wobei über das Empfängermodul Informationen zum Ladezustand des Akkus von der Steuereinheit empfangen werden. Diese können dann dem Nutzer über die weitere Anzeige angezeigt werden.

Es sei darauf hingewiesen, dass in den vorangehenden Figuren lediglich ein Ausführungsbeispiel der Erfindung dargestellt ist. Auch wenn in den Figuren das Akkupack 1 stets im Wesentlichen quaderförmig ausgebildet ist, wäre es prinzipiell auch möglich, eine andere Formgestaltung zu wählen.

## Patentansprüche

1. Akkupack zur Versorgung von elektrischen Bauelementen, insbesondere Heizelementen, umfassend eine Akkueinheit, die mindestens einen in einem ersten Gehäuseteil aufgenommenen Akku aufweist, und ein in einem zweiten Gehäuseteil aufgenommenes Elektronikteil, wobei eine Steuereinheit zur Steuerung einer abzugebenden Spannung bzw. eines abzugebenden Stroms den Elektronikteil aufweist und dass das erste und zweite Gehäuseteil in einer durch einen Anschlag vorgegebenen Halteposition lösbar miteinander verbunden sind, **dadurch gekennzeichnet, dass** mindestens eines der Gehäuseteile einen Ansatz zum Eingreifen in eine Vertiefung des jeweils anderen Gehäuseteils und lösbaren Arretieren in der Halteposition umfasst und die elektrischen Kontakte am Ansatz und am Boden der Vertiefung angeordnet sind, wobei in der Halteposition am ersten Gehäuseteil angeordnete Kontakte mit am zweiten Gehäuseteil angeordneten Kontakten eine leitende Verbindung aufweisen.

2. Akkupack nach Anspruch 1, **dadurch gekennzeichnet, dass** mindestens ein Verrieglungselement mit den Gehäuseteilen in einem Formschluss verbunden ist, der eine Bewegung der Gehäuseteile relativ zueinander hemmt.

3. Akkupack nach Anspruch 2, **dadurch gekennzeichnet, dass** das Verrieglungselement als Spannelement zum Verspannen der Gehäuseteile miteinander und/oder als Einschubelement zum Einschieben in das erste und zweite Gehäuseteil ausgebildet ist.

4. Akkupack nach Anspruche 3, **dadurch gekennzeichnet, dass** das Spannelement zum Unterbinden einer Relativbewegung des ersten Gehäuseteils zum zweiten Gehäuseteil ausgebildet ist, derart, dass das Spannelement als Spannbügel der in eine Aussenfläche des ersten Gehäuseteils die dem zweiten Gehäuseteil abgewandt ist, und in eine dem ersten Gehäuseteil abgewandte Aussenfläche des zweiten Gehäuseteils eingreift.

5. Akkupack nach Anspruch 3 oder 4, **dadurch gekennzeichnet, dass** mindestens zwei Spannelemente die Gehäuseteile auf gegenüberliegenden Seiten übergreifend angeordnet sind.

6. Akkupack nach einem der Ansprüche 3 bis 5, **dadurch gekennzeichnet, dass** die Gehäuseteile jeweils einen zumindest bereichsweise als Hinterschnitt ausgebildeten Einschubkanal aufweisen, die in der Halteposition fluchtend miteinander angeordnet sind, wobei das Einschubelement derart in den Einschubkanälen einbringbar ist, dass die Gehäuseteile gegen eine relative Bewegung verriegelt sind.

7. Akkupack nach Anspruch 6, **dadurch gekennzeichnet, dass** das Einschubelement durch ein Rastelement zum Eingreifen in eine entsprechende Rastvertiefung in einem Boden des Einschubkanals mit mindestens einem Gehäuseteil verrastbar ist.

8. Akkupack nach Anspruch 7, **dadurch gekennzeichnet, dass** an einem Ende des Einschubkanals ein Anschlag angeordnet ist, derart, dass das Einschubelement nur von der dem Anschlag gegenüberliegenden Seite in den Einschubkanal einschiebbar ist, wobei das Rastelement derart ausgebildet ist, dass es durch Unterhebeln von der dem Anschlag gegenüberliegenden Seite aus aus der Rastvertiefung herausgedrückt werden kann.

9. Akkupack nach einem der Ansprüche 2 oder 8, **dadurch gekennzeichnet, dass** das Verriegelungselement als ein Klemmelement zum Befestigen des Akkupacks an einem Kleidungsstück ausgebildet ist oder ein solches umfasst.

10. Akkupack nach Anspruch 9, **dadurch gekennzeichnet, dass** das Klemmelement lösbar im Einschubkanal befestigt ist, wobei das Einschubelement das Klemmelement blockierend angeordnet ist.

11. Akkupack nach einem der Ansprüche 1 bis 10, **dadurch gekennzeichnet, dass**, die Gehäuseteile dazu ausgebildet sind, durch Ineinanderfügen des Ansatzes und der Vertiefung in eine erste Richtung in eine Einschubposition gebracht zu werden und durch Verschieben in eine von der ersten Richtung verschiedene zweite Richtung von der Einschubposition in die Halteposition überführt zu werden, wobei beide Gehäuseteile Formschlusselemente für eine formschlüssige Verbindung in der Halteposition nach dem Verschieben aufweisen.

12. Akkupack nach Anspruch 11, **dadurch gekennzeichnet, dass** die Formschlusselemente als eine Reihe von mit Abstand zueinander angeordneten Vorsprüngen ausgebildet sind, die sich in der Halteposition gegenseitig hintergreifen.

13. Akkupack nach einem der Ansprüche 1 bis 12, **dadurch gekennzeichnet, dass** neben den Kontakten des Ansatzes oder der Vertiefung eine Einsenkung angeordnet ist oder eine Einsenkung von den Kontakten umfasst ist, in die die Kontakte in der Vertiefung bzw. des Ansatzes in der Einschubposition eingreifen, wobei die Kontakte in der Vertiefung bzw. des Ansatzes in der Halteposition gegenüber dem jeweils anderen Kontakt vorgespannt sind.

14. Akkupack nach einem der vorangehenden Ansprüche, **dadurch gekennzeichnet, dass** die Gehäuseteile zusammengefügt eine Quaderform ergeben, wobei die Gehäuseteile jeweils einzeln ebenso quaderförmig ausgebildet sind.

## Claims

1. Battery pack for supplying electronic components, particularly heating units, comprising a battery unit which has one battery mounted in the first casing part and one electronic part mounted in the second casing part, **characterised in that** the control unit has an electronic part for controlling a voltage or current that is to be released, and further **characterised in that** the first and second casing parts are interlinked detachably in a preset holding position by a stopper, in such a way that at least one of the casing parts has a projection for joining onto a cavity of the other respective casing part and comprises detachable locks in the holding position. The battery pack is further **characterised in that** the electronic contacts on the projection and on the base of the cavity are positioned in such a way that the contacts in the holding position on the first casing part have a conducting link with the contacts on the second casing part.

2. The battery pack according to Claim 1, **characterised in that** at least one interlocking element is connected with the casing parts in a form fit which hampers movement of the casing parts relative to one another.

3. The battery pack according to Claim 2, **characterised in that** the interlocking element is designed as a clamping element for interlocking the casing parts with one another and/or is designed as a plug-in unit for inserting the first and second casing part.

4. The battery pack according to Claim 3, **characterised in that** the interlocking element is designed for prevention of relative movement of the first casing part with the second casing part in such a way that the interlocking element joins as a clamping bracket onto an external surface of the first casing part which is turned away from the second casing part and joins onto the external surface of the second casing part which is turned away from the first casing part.

5. The battery pack according to Claim 3 or 4, **characterised in that** at least two interlocking elements are generally positioned on opposite sides of the casing parts.

6. The battery pack according to one of the Claims 3 to 5, **characterised in that** the casing parts have at least one plug-in channel each designed as an undercut in certain areas that are aligned with one another in the holding position, whereby the plug-in unit can be inserted into the plug-in channel in such a way that the casing parts are locked against relative movement.

7. The battery pack according to Claim 6, **characterised in that** the plug-in unit can be locked into one base of the plug-in channel with at least one casing part by a latching element intended to be joined onto a corresponding latching cavity.

8. The battery pack according to Claim 7, **characterised in that** a stopper is positioned at one end of the plug-in channel in such a way that the plug-in unit can be inserted into the plug-in channel only from the side opposite the stopper, whereby the latching element is designed in such a way that it can be pushed out from the latching cavity from the side opposite the stopper using lower levers.

9. The battery pack according to one of Claims 2 or 8, **characterised in that** the interlocking element is designed as a clamping element for attaching the battery pack to a piece of clothing or comprises such an element.

10. The battery pack according to Claim 9, **characterised in that** the clamping element is fixed onto the plug-in channel and can be detached, whereby the plug-in unit is positioned in such a way that it obstructs the clamping element.

11. The battery pack according to one of Claims 1 to 10, **characterized in that** the casing parts are designed to be brought into a plug-in position by joining the projection and the cavity in a first direction and to be taken from the plug-in position into the holding position by moving in a second direction that is distinct from the first direction, whereby the two casing parts have form fit elements intended for a form fit connection in the holding position after they moved into the holding position.

12. The battery pack according to Claim 11, **characterised in that** the form fit elements are designed as a series of projections positioned at a distance from one another which are intermeshed in the holding position.

13. The battery pack according to one of Claims 1 to 12, **characterised in that** there is a depression beside the contacts of the projection or the cavity or a depression in which the contacts join onto the plug-in position in the cavity or the projection, whereby the contacts in the cavity or the projection are pretensioned to the respective other contact in the holding position.

14. The battery pack according to one of the preceding claims, **characterized in that** the casing parts, when joined, form a cuboid, whereby each of the casing parts are also shaped like a cube.

## Revendications

1. Bloc batterie pour alimenter des éléments électriques, en particulier des éléments chauffants, comprenant une unité de batterie laquelle compote au moins une batterie logée dans une première partie de boîtier et une partie électronique logée dans une seconde partie de boîtier, une unité de commande comportant la partie électronique et commandant une tension, respectivement un courant à délivrer, lesdites première et seconde parties de boîtier étant liées de manière séparable dans une position d'assemblage définie par une butée, **caractérisé en ce que** au moins une des parties de boîtier comprend une saillie pour l'engagement dans une cavité de ladite autre partie de boîtier et pour l'immobilisation réversible desdites parties dans la position d'assemblage, les bornes électriques étant disposées sur la saillie et sur le fond de la cavité, les bornes électriques de la première partie de boîtier et de la seconde partie de boîtier étant disposées de manière à établir une liaison électrique dans la position d'assemblage.

2. Bloc batterie selon la revendication 1, **caractérisé en ce qu'**un élément de verrouillage est lié aux parties de boîtier par complémentarité de forme, ledit élément de verrouillage empêchant un mouvement relatif entre les parties de boîtier.

3. Bloc batterie selon la revendication 2, **caractérisé en ce que** l'élément de verrouillage est conformé en élément de serrage pour serrer ensemble les parties de boîtier et/ou en élément d'insertion par l'insertion dans les première et seconde parties de boîtier.

4. Bloc batterie selon la revendication 3, **caractérisé en ce que** l'élément de serrage, conformé pour interdire les mouvements relatifs entre les parties de boîtier, et **en ce que** ledit élément de serrage, tel une bride de fixation engagée sur une face extérieure de la première partie de boîtier, ladite face étant écartée de la seconde partie de boîtier, et sur une face extérieure de la seconde partie de boîtier, ladite face étant écartée de ladite première partie de boîtier.

5. Bloc batterie selon la revendication 3 ou 4, **caractérisé en ce qu'**au moins deux éléments de serrage sont engagés sur deux côtés en vis-à-vis des parties de boîtier.

6. Bloc batterie selon l'une des revendications 3 à 5, **caractérisé en ce que** les parties de boîtier, respectivement au moins de façon localisée, présentent un canal d'insertion sous forme de becquet, sont alignées dans la position d'assemblage, l'élément d'insertion pouvant être engagé dans les canaux d'insertion de manière à empêcher un mouvement relatif des parties de boîtier.

7. Bloc batterie selon la revendication 6, **caractérisé en ce que** l'élément d'insertion peut être solidarisé avec au moins une partie de boîtier par l'intermédiaire de l'engagement d'un cran dans une encoche correspondante d'un fond de canal d'insertion.

8. Bloc batterie selon la revendication 7, **caractérisé en ce qu'**une butée est disposée à une extrémité du canal d'insertion, de manière à ne permettre l'engagement de l'élément d'insertion que du côté opposé à ladite butée, le cran étant conformé pour être forcé vers l'extérieur de l'encoche à partir du côté opposé de la butée.

9. Bloc batterie selon l'une des revendications 2 ou 8, **caractérisé en ce que** l'élément de verrouillage est conformé en élément de fixation pour fixer ledit bloc à un vêtement ou que ledit élément comprend un tel élément de fixation.

10. Bloc batterie selon la revendication 9, **caractérisé en ce que** l'élément de fixation est fixé de façon séparable dans le canal d'insertion, l'élément d'insertion étant agencé pour bloquer l'élément de fixation.

11. Bloc batterie selon l'une des revendications 1 à 10, **caractérisé en ce que** les parties de boîtier sont conformées pour être disposées en position d'insertion selon une première direction par emboitement de la saillie et de la cavité, et pour être amenées par coulissement selon une deuxième direction, différente de la première direction, de la position d'insertion vers la position d'assemblage, les deux parties de boîtier comportant des éléments de forme complémentaire pour présenter une liaison par complémentarité de forme dans la position d'assemblage après le coulissement.

12. Bloc batterie selon la revendication 11, **caractérisé en ce que** les éléments de forme complémentaire sont conformés en rangée d'épaulements, lesquels sont mutuellement en appui dans la position d'assemblage.

13. Bloc batterie selon l'une des revendications 1 à 12, **caractérisé en ce qu'**à côté des bornes électriques de la saillie ou de la cavité est agencé un enfoncement, ou **en ce qu'**un enfoncement est entouré par les bornes électriques, lesdites bornes de la cavité, respectivement de la saillie s'engageant dans l'enfoncement dans la position d'insertion, les bornes de la cavité, respectivement de la saillie étant précontraintes par rapport aux autres bornes respectives dans la position d'assemblage.

14. Bloc batterie selon l'une des revendications précédentes, **caractérisé en ce que** les parties de boiter présentent assemblées ou individuellement, une forme parallélépipédique.
